(19) Europäisches Patentamt
European Patent Office
Office européen des brevets

(11) EP 0 639 205 B1

(12) # EUROPÄISCHE PATENTSCHRIFT

(45) Veröffentlichungstag und Bekanntmachung des Hinweises auf die Patenterteilung:
**21.08.1996 Patentblatt 1996/34**

(21) Anmeldenummer: **93909910.7**

(22) Anmeldetag: **06.05.1993**

(51) Int Cl.[6]: **C08G 77/38**, C08G 77/50

(86) Internationale Anmeldenummer:
**PCT/EP93/01113**

(87) Internationale Veröffentlichungsnummer:
**WO 93/22368 (11.11.1993 Gazette 1993/27)**

(54) **VINYLOXYGRUPPEN AUFWEISENDE SILOXANCOPOLYMERE, DEREN HERSTELLUNG UND VERWENDUNG**

SILOXANE COPOLYMERS CONTAINING VINYLOXY GROUPS, THEIR PREPARATION AND USE

COPOLYMERES DE SILOXANE COMPORTANT DES GROUPES VINYLOXY, LEUR FABRICATION ET LEUR UTILISATION

(84) Benannte Vertragsstaaten:
**AT BE CH DE ES FR GB IT LI NL**

(30) Priorität: **07.05.1992 DE 4215076**

(43) Veröffentlichungstag der Anmeldung:
**22.02.1995 Patentblatt 1995/08**

(73) Patentinhaber: **WACKER-CHEMIE GMBH**
**D-81737 München (DE)**

(72) Erfinder:
- **HERZIG, Christian**
  **D-83737 Taching (DE)**
- **RENGSTL, Alfred**
  **D-84571 Reischach (DE)**

(56) Entgegenhaltungen:
**EP-A- 0 439 777**
**EP-A- 0 439 778**
**EP-A- 0 449 050**
**WO-A-83/03418**
**WO-A-91/05756**
**US-A- 5 057 549**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die Erfindung betrifft Vinyloxygruppen aufweisende Siloxancopolymere sowie ein Verfahren zu deren Herstellung. Weiterhin betrifft die Erfindung durch Licht vernetzbare Zusammensetzungen auf der Grundlage von Vinyloxygruppen aufweisenden Siloxancopolymeren.

Aus EP-B 105 341 sind Organopolysiloxane bekannt, die je Molekül mindestens eine Si-gebundene vinyloxyfunktionelle Gruppe der Formel

$$H_2C=CH\text{-}O\text{-}G\text{-}$$

enthalten, wobei G ein Alkylenrest ist oder einen Alkylenrest bedeutet, der durch mindestens einen zweiwertigen Heterorest, wie -O-, zweiwertigen Phenylenrest oder substituierten zweiwertigen Phenylenrest oder Kombinationen solcher Heteroreste, unterbrochen ist. Diese Organopolysiloxane werden erhalten durch Herstellung einer Verbindung mit einer Allyl- und einer Vinyloxygruppe und Anlagerung dieser Verbindung an die SiH-Gruppen der Organopolysiloxane, wobei die Hydrosilylierung nur an der Allylgruppe erfolgt. In EP-B 105 341 sind weiterhin durch Licht vernetzbare Zusammensetzungen beschrieben, die die vorstehend genannten Organopolysiloxane enthalten, sowie Oniumsalze, die die kationische Polymerisation dieser Organopolysiloxane katalysieren.

Aus Chemical Abstracts 107,176221q ist zur Herstellung von plastischen Linsen ein Silan mit einer Vinyloxypropylgruppe und mindestens einer Trimethylsiloxygruppe bekannt, das durch Hydrosilylierung von Allylvinylether mit Trimethylsiloxygruppen aufweisendem Silan, wobei die Addition an der Allylgruppe erfolgt, erhalten wird.

In US-A 5,057,549 und CA-A 20 35 396 sind Propenyloxygruppen enthaltende Organopolysiloxane bzw. Propenyloxygruppen enthaltende Siloxancopolymere beschrieben, die in einem zweistufigen Verfahren hergestellt werden durch Anlagerung von Verbindungen mit zwei bzw. mehr als zwei Allyloxygruppen an SiH-Gruppen von Organopolysiloxanen und anschließende Umwandlung der Allyloxygruppen zu den Propenyloxygruppen durch Umlagerung der Doppelbindung.

Aus US-A 5,145,915 sind Organopolysiloxane mit einer beliebigen Anzahl von substituierten Vinylethergruppen bekannt, die durch Hydrosilylierung, also durch Umsetzung eines SiH-Gruppen aufweisenden Organopolysiloxans mit einem Polyoxyalkylenether beispielsweise der Formel

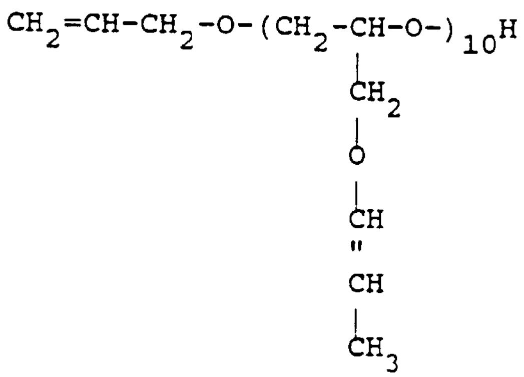

,

wobei die Addition an der Allylgruppe erfolgt, hergestellt werden.

Es bestand die Aufgabe, Vinyloxygruppen aufweisende Siloxancopolymere bereitzustellen, die in einem einfachen Verfahren herstellbar sind, wobei das Verfahren es erlaubt, an einem Siliziumatom mehr als eine Vinyloxygruppe einzuführen. Weiterhin bestand die Aufgabe Vinyloxygruppen aufweisende Siloxancopolymere bereitzustellen, welche bei Einwirkung von Licht, insbesondere von Ultraviolettlicht, unter kationischer Polymerisation besonders rasch vernetzen. Diese Aufgabe wird durch die Erfindung gelöst.

Gegenstand der Erfindung sind Vinyloxygruppen aufweisende Siloxancopolymere enthaltend

(a) Siloxaneinheiten der Formel

$$R_aSi(OR^1)_bO_{\frac{4-(a+b)}{2}} \quad (I),$$

wobei

R gleiche oder verschiedene, gegebenenfalls halogenierte Kohlenwasserstoffreste mit 1 bis 18 Kohlenstoffatom(en) je Rest,

$R^1$ gleiche oder verschiedene Alkylreste mit 1 bis 4 Kohlenstoffatom(en) je Rest, die durch ein Ethersauerstoffatom substituiert sein können, bedeutet,

a 0, 1, 2 oder 3,
b 0, 1, 2 oder 3
und die Summe a+b nicht größer als 3 ist,

(b) je Molekül mindestens eine Einheit ausgewählt aus der Gruppe von Einheiten der Formeln

$$GR_cSiO_{\frac{4-(c+1)}{2}} \quad \text{(II)},$$

$$O_{\frac{4-(c+1)}{2}}R_cSi\text{-}G^1\text{-}SiR_cO_{\frac{4-(c+1)}{2}} \quad \text{(III)},$$

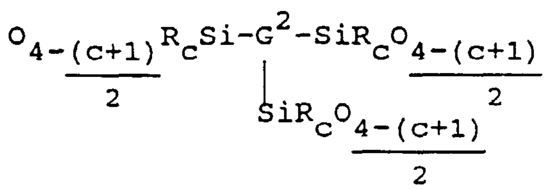

(IV)

und

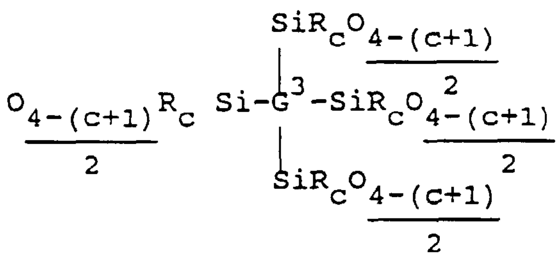

(V),

wobei

R die oben dafür angegebene Bedeutung hat,

c 0, 1 oder 2 ist,

G einen Rest der Formel

$$-CH_2CH_2OY(OCH{=}CH_2)_{x-1}$$

bedeutet, wobei

Y einen zweiwertigen, dreiwertigen, vierwertigen, fünfwertigen oder sechswertigen Kohlenwasserstoffrest mit 1 bis 20 Kohlenstoffatomen je Rest bedeutet,
der durch Gruppen der Formel

- OH
- $OR^2$ (wobei $R^2$ einen Alkylrest mit 1 bis 6 Kohlenstoffatom(en) je Rest bedeutet)
- $OSiR^3_3$ (wobei $R^3$ einen Methyl-, Ethyl-, Isopropyl-, tert.-Butyl- oder Phenylrest bedeutet)
-

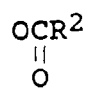

(wobei $R^2$ die oben dafür angegebene Bedeutung hat) oder
- X (wobei X ein Halogenatom bedeutet) substituiert sein kann

oder durch mindestens ein Sauerstoffatom, eine Carboxyl- oder eine Carbonylgruppe unterbrochen sein kann, und

x 2, 3, 4, 5 oder 6 ist,

$G^1$ einen Rest der Formel

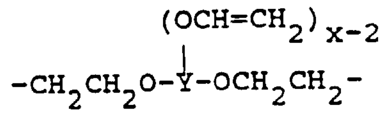

$G^2$ einen Rest der Formel

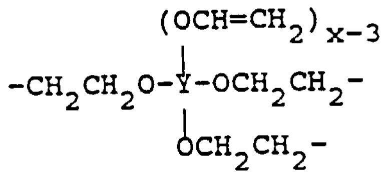

und

$G^3$ einen Rest der Formel

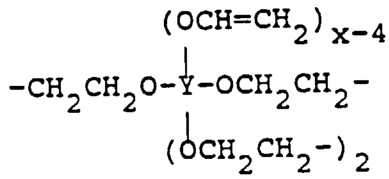

,

wobei Y und x die oben dafür angegebene Bedeutung haben, bedeutet.

Vorzugsweise enthalten die Vinyloxygruppen aufweisenden Siloxancopolymere Siloxaneinheiten der Formel (I), je Molekül mindestens eine Siloxaneinheit der Formel (II) und je Molekül mindestens eine Einheit ausgewählt aus der Gruppe der Einheiten der Formeln (III), (IV) und (V).

Gegenstand der Erfindung ist weiterhin ein Verfahren zur Herstellung der Vinyloxygruppen aufweisenden Siloxancopolymere, dadurch gekennzeichnet, daß mehr als eine Vinyloxygruppe aufweisende organische Verbindung (1) der allgemeinen Formel

$$Y(OCH{=}CH_2)_x \qquad (1),$$

wobei Y und x die oben dafür angegebene Bedeutung haben, mit Organopolysiloxan (2) mit mindestens einem Si-gebundenen Wasserstoffatom je Molekül in Gegenwart von die Anlagerung von Si-gebundenem Wasserstoff an aliphatische Doppelbindung förderndem Katalysator (3) umgesetzt wird, wobei das eingesetzte Verhältnis von aliphatische Doppelbindung in organischer Verbindung (1) zu Si-gebundenem Wasserstoff im Organopolysiloxan (2) ein solches ist, daß Vinyloxygruppen aufweisende Siloxancopolymere mit durchschnittlich mindestens einer Vinyloxygruppe der Formel

$$-OCH{=}CH_2$$

erhalten werden.

Im Stand der Technik, wie in der eingangs genannten EP-B 105 341, sind weder Vinyloxygruppen aufweisende Siloxancopolymere beschrieben noch war es zu erwarten, daß solche durch Addition (Hydrosilylierung) von SiH-Gruppen an Vinyloxygruppen erhalten werden können, da gemäß der EP-B 105 341 die Einführung einer Vinyloxygruppe in ein Organopolysiloxan nur gelingt durch Hydrosilylierung einer Verbindung, die eine Allylgruppe und eine Vinyloxygruppe enthält, wobei die Addition an der Allylgruppe erfolgt.

Vorzugsweise ist x 2, 3 oder 4 und Y ein zweiwertiger, dreiwertiger oder vierwertiger Rest.

Die erfindungsgemäßen, Vinyloxygruppen aufweisenden Organopolysiloxane besitzen vorzugsweise eine Viskosität von 5 bis $5 \cdot 10^5$ mPa.s bei 25°C, bevorzugt 50 bis 50000 mPa·s bei 25°C.

In den erfindungsgemäßen Vinyloxygruppen aufweisenden Siloxancopolymeren beträgt der Siloxananteil vorzugsweise 20 bis 90 Gew.-%, bezogen auf das Gesamtgewicht der Vinyloxygruppen aufweisenden Siloxancopolymere.

Beispiele für Reste R sind Alkylreste, wie der Methyl-, Ethyl-, n- Propyl-, iso-Propyl-, 1-n-Butyl-, 2-n-Butyl-, iso-Butyl-, tert.-Butyl-, n-Pentyl-, iso-Pentyl-, neo-Pentyl, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie

der n-Nonylrest; Decylreste, wie der n-Decylrest; Dodecylreste, wie der n-Dodecylrest; Octadecylreste, wie der n-Octadecylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest. Bevorzugt ist der Methylrest.

Beispiele für halogenierte Reste R sind Halogenalkylreste, wie der 3,3,3-Trifluor-n-propylrest, der 2,2,2,2',2',2'-Hexafluorisopropylrest, der Heptafluorisopropylrest, und Halogenarylreste, wie der o-, m-, und p-Chlorphenylrest.

Beispiele für Alkylreste $R^1$ sind der Methyl-, Ethyl-, n-Propyl-, iso-Propyl-, 1-n-Butyl-, 2-n-Butyl-, iso-Butyl-, und tert.-Butylrest. Bevorzugt sind der Methyl- und Ethylrest. Beispiele für Alkylreste $R^1$, die durch ein Ethersauerstoffatom substituiert sind, sind der Methoxyethylen- und Ethoxyethylenrest.

Beispiele für Alkylreste $R^2$ sind der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl, tert.-Pentylrest und Hexylreste, wie der n-Hexylrest.

Bevorzugt als Vinyloxygruppen aufweisende Siloxancopolymere sind solche, die

(a) Siloxaneinheiten der Formel

$$R_2SiO \quad (I'),$$

(b) je Molekül mindestens zwei Siloxaneinheiten der Formel

$$GR_2SiO_{1/2} \quad (II')$$

und je Molekül mindestens eine Einheit der Formel

$$O_{1/2}R_2SiG^1SiR_2O_{1/2} \quad (III'),$$

wobei R, G und $G^1$ die oben dafür angegebene Bedeutung haben, enthalten.

Beispiele für mehr als eine Vinyloxygruppe aufweisende organische Verbindung (1), die bei dem erfindungsgemäßen Verfahren eingesetzt wird, sind solche der Formel

$$CH_2=CH\text{-}O\text{-}CH_2\text{-}CH_2\text{-}O\text{-}CH=CH_2$$

$$CH_2=CH\text{-}O\text{-}(CH_2)_4\text{-}O\text{-}CH=CH_2$$

$$CH_2=CH\text{-}O\text{-}(CH_2CH_2O)_3\text{-}CH=CH_2$$

$$CH_2=CH\text{-}O\text{-}(CH_2CH_2CH_2CH_2O)_n\text{-}CH\text{-}CH_2 \qquad n=2\text{-}6$$

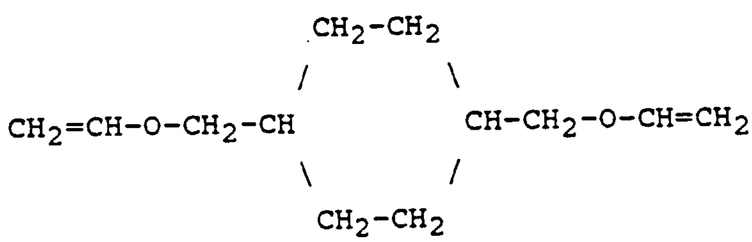

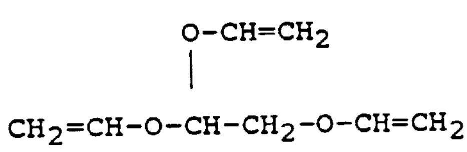

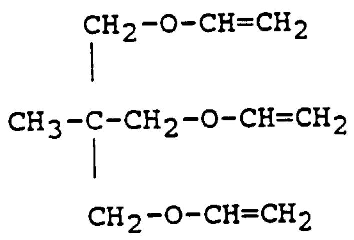

$$CH_3\text{-}C[CH_2\text{-}O(CH_2CH_2O)_m\text{-}CH{=}CH_2]_3 \qquad m=1\text{-}10$$

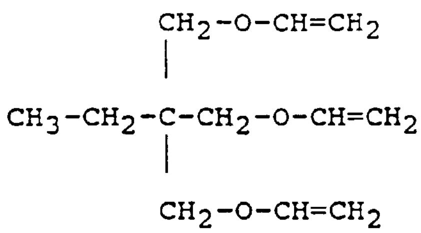

$$CH_3\text{-}CH_2\text{-}C[CH_2\text{-}O(CH_2CH_2O)_m\text{-}CH{=}CH_2]_3 \qquad m=1\text{-}10$$

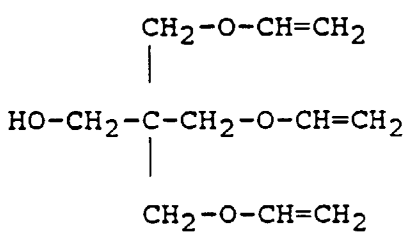

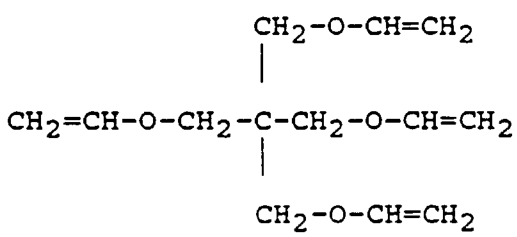

$$(CH_2{=}CH\text{-}O)_2CHCH(O\text{-}CH{=}CH_2)_2$$

$$(CH_2{=}CH\text{-}O)_2CHCH_2CH(O\text{-}CH{=}CH_2)_2$$

$$CH_3C(O\text{-}CH{=}CH_2)_3$$

$$(CH_2{=}CH\text{-}O)CH_2[CH(O\text{-}CH{=}CH_2)]_3CH_2(O\text{-}CH{=}CH_2)$$

und

$$(CH_2{=}CH\text{-}O)CH_2[CH(O\text{-}CH{=}CH_2)]_4CH_2(O\text{-}CH{=}CH_2)$$

Bevorzugte Beispiele für organische Verbindung (1) sind

$$CH_2{=}CH\text{-}O\text{-}(CH_2CH_2O)_3\text{-}CH{=}CH_2$$

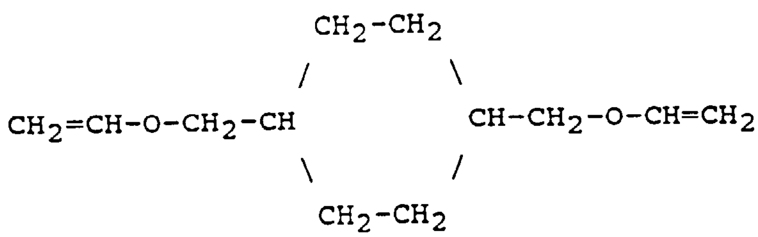

$CH_3\text{-}C[CH_2\text{-}O\text{-}CH{=}CH_2]_3$

$CH_3\text{-}C[CH_2\text{-}O(CH_2CH_2O)_m\text{-}CH{=}CH_2]_3$ m=1-10

$CH_3\text{-}CH_2\text{-}C[CH_2\text{-}O\text{-}CH{=}CH_2]_3$

und

$CH_3\text{-}CH_2\text{-}C[CH_2\text{-}O(CH_2CH_2O)_m\text{-}CH{=}CH_2]_3$ m=1-10.

Beispiele für den Rest Y sind daher solche der Formel

$-(CH_2)_2-$

$-(CH_2)_4-$

$-(CH_2CH_2O)_2\text{-}CH_2\text{-}CH_2-$

$-(CH_2CH_2CH_2CH_2O)_{n-1}CH_2CH_2CH_2CH_2-$ n=2-6

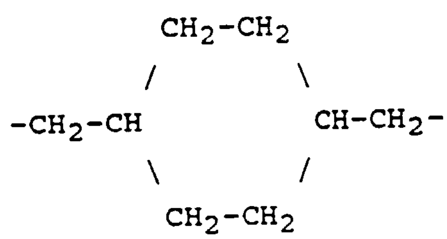

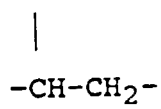

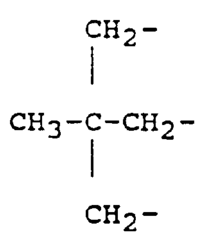

$CH_3\text{-}C[CH_2\text{-}O(CH_2CH_2O)_{m-1}CH_2CH_2\text{-}]_3$ m=1-10

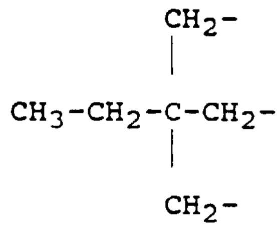

$CH_3\text{-}CH_2\text{-}C[CH_2\text{-}O(CH_2CH_2O)_{m-1}CH_2CH_2\text{-}]_3$  m=1-10

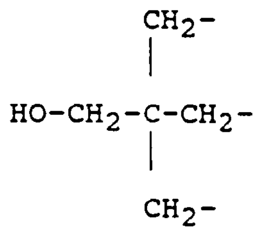

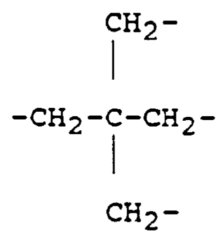

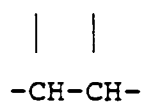

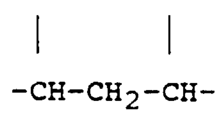

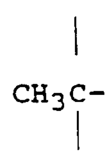

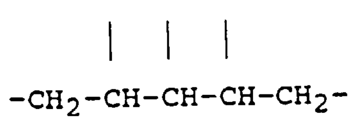

und

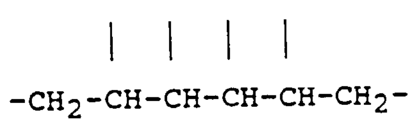

.

Verfahren zur Herstellung von organischer Verbindung (1) sind beispielsweise in der PCT-Anmeldung WO 91/05756 beschrieben. Grundlage für die Herstellung ist die dem Fachmann bekannte Vinylierung nach Reppe, bei der Alkohole katalytisch mit Acetylen umgesetzt werden.

Typische Verunreinigungen technischer Vinylether sind Vinyletheralkohole, die durch unvollständige Vinylierung als "Zwischenstufen" erhalten bleiben, sowie gegebenenfalls deren Folgeprodukte durch Eigencyclisierung, wie beispielsweise

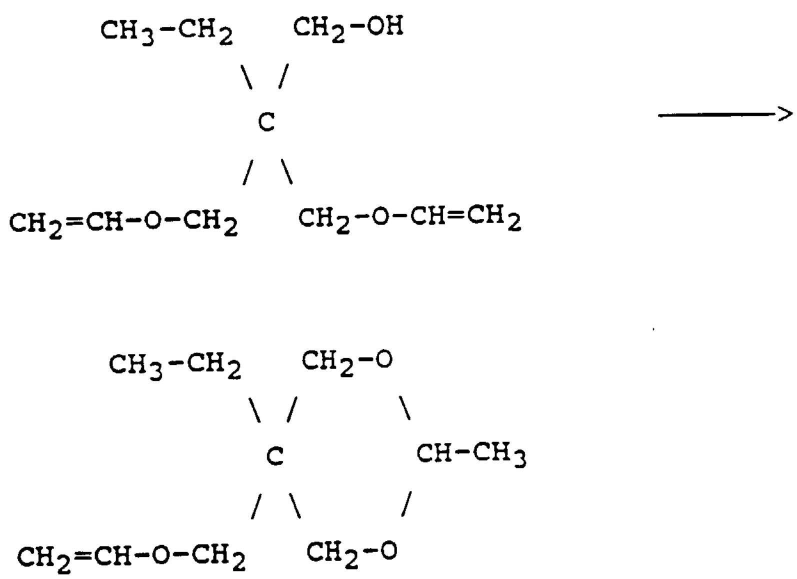

Vorzugsweise werden als Organopolysiloxane (2) mit mindestens einem Si-gebundenen Wasserstoffatom solche der allgemeinen Formel

$$H_eR_fSiO_{\frac{4-(e+f)}{2}} \quad \text{(VI)},$$

wobei

R die oben dafür angegebene Bedeutung hat,
e 0 oder 1, durchnittlich 0,005 bis 1,0,
f 0, 1, 2 oder 3, durchschnittlich 1,0 bis 2,5 und
die Summe e+f nicht größer als 3 ist,

bei dem erfindungsgemäßen Verfahren eingesetzt.

Bevorzugt werden als Organopolysiloxane (2) mit mindestens einem Si-gebundenen Wasserstoffatom solche der allgemeinen Formel

$$H_dR_{3-d}SiO(SiR_2O)_o(SiRHO)_pSiR_{3-d}H_d \quad \text{(VII)},$$

wobei

R die oben dafür angegebene Bedeutung hat,
d gleich oder verschieden und 0 oder 1 ist,
o 0 oder eine ganze Zahl von 1 bis 1000 und
p 0 oder eine ganze Zahl von 1 bis 6 bedeutet,

bei dem erfindungsgemäßen Verfahren eingesetzt.

Besonders bevorzugt enthalten die bei dem erfindungsgemäßen Verfahren eingesetzten Organopolysiloxane (2) 2 bis 6 Sigebundene Wasserstoffatome je Molekül.

Die Organopolysiloxane (2) mit mindestens einem Si-gebundenen Wasserstoffatom je Molekül besitzen vorzugsweise eine Viskosität von 0,5 bis 20 000 mPa·s bei 25°C, bevorzugt 5 bis 1000 mPa·s bei 25°C.

Bevorzugte Beispiele für Organopolysiloxane der Formel (VII) sind Mischpolymerisate aus Dimethylhydrogensiloxan- und Dimethylsiloxaneinheiten, Mischpolymerisate aus Dimethylhydrogensiloxan-, Dimethylsiloxan- und Methylhydrogensiloxaneinheiten, Mischpolymerisate aus Trimethylsiloxan- und Methylhydrogensiloxaneinheiten und Mischpolymerisate aus Trimethylsiloxan-, Dimethylsiloxan- und Methylhydrogensiloxaneinheiten.

Verfahren zum Herstellen von Organopolysiloxanen mit mindestens einem Si-gebundenen Wasserstoffatom je Molekül, auch von solchen der bevorzugten Art, sind allgemein bekannt.

Organische Verbindung (1) wird bei dem erfindungsgemäßen Verfahren in solchen Mengen eingesetzt, daß aliphatische Doppelbindung in organischer Verbindung (1) zu Si-gebundenem Wasserstoff in Organopolysiloxan (2) im Verhältnis von vorzugsweise 1,5 : 1 bis 20 : 1, bevorzugt 2 : 1 bis 10 : 1, vorliegt. Organische Verbindung (1) kann mit Organopolysiloxan (2) in Abhängigkeit ihrer Funktionalität und ihres Molekulargewichtes annähernd beliebig in sehr weiten Grenzen kombiniert werden. Ein Verhältnis C=C : SiH von größer als 20 : 1 führt aber ausschließlich zur Monohydrosilylierung der organischen Verbindung (1), was nicht bevorzugt ist.

Die Umsetzung von organischer Verbindung (1), wie Triethylenglycoldivinylether, mit Organopolysiloxan (2), wie $\alpha,\omega$-Dihydrogendimethylpolysiloxan, in Gegenwart von Katalysator (3) läuft nach folgendem Reaktionsschema ab:

$$HSiMe_2O(SiMe_2O)_nSiMe_2H + CH_2{=}CHO\text{-}(CH_2CH_2O)_3\text{-}CH{=}CH_2 \rightarrow$$

$$CH_2{=}CHO\text{-}(CH_2CH_2O)_3\text{-}CH_2CH_2SiMe_2O(SiMe_2O)_nSiMe_2CH_2CH_2O\text{-}$$

$$\text{-}(CH_2CH_2O)_3\text{-}CH_2CH_2SiMe_2O(SiMe_2O)_nSiMe_2CH_2CH_2O\text{-}$$

$$(CH_2CH_2O)_3CH{=}CH_2$$

Der Reaktionsablauf und damit das erhaltene Endprodukt hängt entscheidend von dem eingesetzten Verhältnis von C=C-Doppelbindung in organischer Verbindung (1) zu Si-gebundenem Wasserstoff in Organopolysiloxan (2) ab. Es werden je nach eingesetztem Verhältnis C=C : SiH - wobei das Verhältnis C=C : SiH immer größer als 1 sein muß - Siloxancopolymere erhalten, die am Kettenende und entlang der Kette (beispielsweise bei Verwendung von organischer Verbindung (1) mit mehr als zwei Vinyloxygruppen) freie Vinyloxygruppen der Formel

$$\text{-}OCH{=}CH_2$$

aufweisen, wobei es zu Verzweigungen entlang der Kette kommen kann durch Weiterreaktion der freien Vinyloxygruppen entlang der Kette mit den Si-gebundenen Wasserstoffatomen des Organopolysiloxans (2).

Als die Anlagerung von Si-gebundenem Wasserstoff an aliphatische Mehrfachbindung fördernde Katalysatoren (3) können auch bei dem erfindungsgemäßen Verfahren die gleichen Katalysatoren eingesetzt werden, die auch bisher zur Förderung der Anlagerung von Si-gebundenem Wasserstoff an aliphatische Doppelbindung eingesetzt werden konnten. Bei den Katalysatoren (3) handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxyd, Aluminiumoxyd oder Aktivkohle befinden kann, Verbindungen und Komplexe von Platin, wie Platinhalogenide, z.B. $PtCl_4$, $H_2PtCl_6{*}6H_2O$, $Na_2PtCl_4{*}4H_2O$, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6{*}6H_2O$ und Cyclohexanon, Platin-Vinylsiloxankomplexe, wie Platin-1,3-Divinyl-1,1,3,3-tetramethyldisiloxankomplexe mit oder ohne Gehalt an nachweisbarem anorganisch gebundenem Halogen, Bis-(gamma-picolin)-platindichlorid, Trimethylendipyridin-platindichlorid, Dicyclopentadienplatindichlorid, Dimethylsulfoxydethylenplatin-(II)-dichlorid sowie Umsetzungsprodukte von Platintetrachlorid mit Olefin und primärem Amin oder sekundärem Amin oder primärem und sekundärem Amin gemäß US-A 4,292,434, wie das Umsetzungsprodukt aus in 1-Octen gelöstem Platintetrachlorid mit sec.-Butylamin, und Ammonium-Platinkomplexe gemäß EP-B 110 370, und Verbindungen und Komplexe von Rhodium, wie die Rhodiumkomplexe gemäß EP-A 476 426.

Der Katalysator (3) wird vorzugsweise in Mengen von 2 bis 1000 Gew.-ppm (Gewichtsteilen je Million Gewichtsteilen), bevorzugt in Mengen von 10 bis 50 Gew.-ppm, jeweils berechnet als elementares Platin und bezogen auf das Gesamtgewicht von organischer Verbindung (1) und Organopolysiloxan (2).

Das erfindungsgemäße Verfahren wird vorzugsweise beim Druck der umgebenden Atmosphäre, also etwa bei 1020 hPa (abs.), durchgeführt; es kann aber auch bei höheren oder niedrigeren Drücken durchgeführt werden. Ferner wird das erfindungsgemäße Verfahren vorzugsweise bei einer Temperatur von 50°C bis 170°C, bevorzugt 80°C bis 150°C, durchgeführt.

Bei dem erfindungsgemäßen Verfahren können inerte, organische Lösungsmittel mitverwendet werden, obwohl die Mitverwendung von inerten, organischen Lösungsmitteln nicht bevorzugt ist. Beispiele für inerte, organische Lösungsmittel sind Toluol, Xylol, Octanisomere, Butylacetat, 1,2-Dimethoxyethan, Tetrahydrofuran und Cyclohexan.

Von den nach dem erfindungsgemäßen Verfahren hergestellten Vinyloxygruppen aufweisenden Siloxancopolymeren wird vorzugsweise überschüssige organische Verbindung (1) sowie gegebenenfalls mitverwendetes inertes organisches Lösungsmittel destillativ entfernt.

Die nach dem erfindungsgemäßen Verfahren hergestellten Vinyloxygruppen aufweisenden Siloxancopolymere

werden gegebenenfalls mit Organopolysiloxan (4) äquilibriert.

Als Organopolysiloxane (4) werden vorzugsweise solche ausgewählt aus der Gruppe bestehend aus linearen, endständige Triorganosiloxygruppen aufweisenden Organopolysiloxanen der Formel

$$R_3SiO(SiR_2O)_rSiR_3 ,$$

wobei R die oben dafür angegebene Bedeutung hat und r 0 oder eine ganze Zahl im Wert von 1 bis 1500 ist, linearen, endständige Hydroxylgruppen aufweisenden Organopolysiloxanen der Formel

$$HO(SiR_2O)_sH ,$$

wobei R die oben dafür angegebene Bedeutung hat und s eine ganze Zahl im Wert von 1 bis 1500 ist, cyclischen Organopolysiloxanen der Formel

$$(R_2SiO)_t,$$

wobei R die oben dafür angegebene Bedeutung hat und t eine ganze Zahl von 3 bis 12 ist, und Mischpolymerisaten aus Einheiten der Formel

$$R_2SiO \text{ und } RSiO_{3/2} ,$$

wobei R die oben dafür angegebene Bedeutung hat, eingesetzt.

Das Mengenverhältnis des bei der gegebenenfalls durchgeführten Äquilibrierung eingesetzten Organopolysiloxans (4) und Vinyloxygruppen aufweisenden Siloxancopolymeren wird lediglich durch den gewünschten Anteil der Vinyloxygruppen in den bei der gegebenenfalls durchgeführten Äquilibrierung erzeugten Siloxancopolymeren und durch die gewünschte mittlere Kettenlänge bestimmt.

Bei dem gegebenenfalls durchgeführten Äquilibrieren werden vorzugsweise basische Katalysatoren, welche die Äquilibrierung fördern, eingesetzt. Beispiele für solche Katalysatoren sind Alkalihydroxide, wie Natriumhydroxid und Kaliumhydroxid, Trimethylbenzylammoniumhydroxid und Tetramethylammoniumhydroxid. Bevorzugt sind Alkalihydroxide. Alkalihydroxide werden vorzugsweise in Mengen von 50 bis 10 000 Gew.-ppm (= Teile je Million), insbesondere 500 bis 2000 Gew.-ppm, jeweils bezogen auf das Gesamtgewicht von eingesetztem Vinyloxygruppen aufweisendem Siloxancopolymer und eingesetztem Organopolysiloxan (4), verwendet. Die Verwendung saurer Äquilibrierungskatalysatoren ist zwar möglich, jedoch nicht bevorzugt.

Die gegebenenfalls durchgeführte Äquilibrierung wird vorzugsweise bei 100°C bis 150°C und beim Druck der umgebenden Atmosphäre, also etwa bei 1020 hPa (abs.), durchgeführt. Falls erwünscht, können aber auch höhere oder niedrigere Drücke angewendet werden. Das Äquilibrieren wird vorzugsweise in 5 bis 20 Gew.-%, bezogen auf das Gesamtgewicht von jeweils eingesetztem Vinyloxygruppen aufweisendem Siloxancopolymer und eingesetztem Organopolysiloxan (4), in mit Wasser nichtmischbarem Lösungsmittel, wie Toluol, durchgeführt. Vor dem Aufarbeiten des bei dem Äquilibrieren erhaltenen Gemisches kann der Katalysator unwirksam gemacht werden.

Das erfindungsgemäße Verfahren kann absatzweise, halbkontinuierlich oder vollkontinuierlich durchgeführt werden.

Die erfindungsgemäßen Vinyloxygruppen aufweisenden Siloxancopolymere sind kationisch vernetzbar, beispielsweise durch Zugabe von Säuren, wie Salzsäuren, Schwefelsäuren oder p-Toluolsulfonsäuren. Die erfindungsgemäßen Vinyloxygruppen aufweisenden Siloxancopolymere werden vorzugsweise in einer durch Licht initiierten, kationischen Polymerisation vernetzt. Als Katalysatoren für die durch Licht initiierte Vernetzung werden vorzugsweise Oniumsalze, wie Diaryljodoniumsalze oder Triarylsulfoniumsalze, verwendet, die aus EP-B 105 341 und der deutschen Anmeldung der Anmelderin mit dem Aktenzeichen P 41 42 327.5 bekannt sind. Beispiele für solche Oniumsalze sind die in EP-B 105 341 beschriebenen Bis-(dodecylphenyl)-iodoniumsalze, wie Bis-(dodecylphenyl)iodoniumhexafluoroantimonat oder Bis-(dodecylphenyl)iodoniumhexafluoroarsenat oder die in der deutschen Anmeldung mit dem Aktenzeichen P 41 42 327.5 beschriebenen Jodoniumsalze der Formel

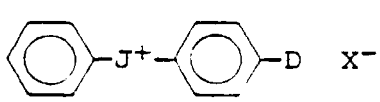

wobei D ein Rest der Formel

$$-O-R^4-SiR^5_3$$

bedeutet, worin

$R^4$ einen zweiwertigen Kohlenwasserstoffrest mit 1 bis 18 Kohlenstoffatomen je Rest, der gegebenfalls durch mindestens ein Sauerstoffatom und/oder ein Schwefelatom und/oder eine Carboxylgruppe unterbrochen ist,
$R^5$ einen einwertigen Kohlenwasserstoffrest mit 1 bis 18 Kohlenstoffatomen je Rest, der gegebenenfalls durch mindestens ein Sauerstoffatom unterbrochen ist, und
$X^-$ ein Tosylatanion oder ein schwach nukleophiles oder nicht nukleophiles Anion $Y^-$, ausgewählt aus der Gruppe von $CF_3CO_2^-$, $BF_4^-$, $PF_6^-$, $AsF_6^-$, $SbF_6^-$, $ClO_4^-$, $HSO_4^-$, $CF_3SO_3^-$, und $C_4F_9SO_3^-$ bedeutet.

Gegenstand der Erfindung ist daher die Verwendung von Vinyloxygruppen aufweisenden Siloxancopolymeren vorzugsweise enthaltend Einheiten der Formeln (I), (II) und gegebenenfalls mindestens eine der Einheiten der Formeln (III), (IV) oder (V), bevorzugt enthaltend Einheiten der Formeln (I'), (II') und (III'), in durch Licht vernetzbaren Zusammensetzungen auf Grundlage von vorstehend genannten Siloxancopolymeren.

Vorzugsweise werden die erfindungsgemäßen Vinyloxygruppen aufweisenden Siloxancopolymere durch Ultraviolettlicht vernetzt, wobei solches mit Wellenlängen im Bereich von 200 bis 400 nm bevorzugt ist. Das Ultraviolettlicht kann z.B. in Xenon-, Quecksilbernieder-, Quecksilbermittel- oder Queck- silberhochdrucklampen erzeugt werden. Zur Vernetzung durch Licht ist auch solches mit einer Wellenlänge von 400 bis 600 nm, also sogenanntes "Halogenlicht", geeignet. Die erfindungsgemäßen Vinyloxygruppen aufweisenden Siloxancopolymere können durch Licht im sichtbaren Bereich vernetzt werden, wenn handelsübliche Photosensibilisatoren mitverwendet werden.

Die kationische Polymerisation der erfindungsgemäßen Vinyloxygruppen aufweisenden Siloxancopolymere kann natürlich auch durch dafür übliche Brönsted- oder Lewissäuren eingeleitet werden.

Gegenstand der Erfindung ist schließlich auch die Verwendung der erfindungsgemäßen Vinyloxygruppen aufweisenden Siloxancopolymeren zur Herstellung von durch Licht vernetzbaren Überzügen.

Die erfindungsgemäßen Vinyloxygruppen aufweisenden Siloxancopolymere können in strahlungshärtenden Druckfarben verwendet werden.

Beispiele für Oberflächen, auf welche die erfindungsgemäßen Überzüge aufgebracht werden können, sind diejenigen von Papier, Holz, Kork, Kunststoffolien, z.B. Polyethylenfolien oder Polypropylenfolien, keramischen Gegenständen, Glas, einschließlich Glasfasern, Metallen, Pappen, einschließlich solcher aus Asbest, und von gewebtem und ungewebtem Tuch aus natürlichen oder synthetischen organischen Fasern.

Das Auftragen der erfindungsgemäßen Vinyloxygruppen aufweisenden Siloxancopolymeren auf die zu überziehenden Oberflächen kann in beliebiger, für die Herstellung von Überzügen aus flüssigen Stoffen geeigneter und vielfach bekannter Weise erfolgen, beispielsweise durch Tauchen, Streichen, Gießen, Sprühen, Aufwalzen, Drucken, z. B. mittels einer Offsetgravurüberzugsvorrichtung, Messer- oder Rakelbeschichtung.

Beispiel 1:

Unter Stickstoffatmosphäre werden 238 g eines Mischpolymerisates aus Hydrogendimethylsiloxan- und Dimethylsiloxaneinheiten mit einer Viskosität von 11 $mm^2/s$ bei 25°C, entsprechend 0,5 g Si-gebundenen Wasserstoffs, zusammen mit 78,5 g des Vinylethers der Formel

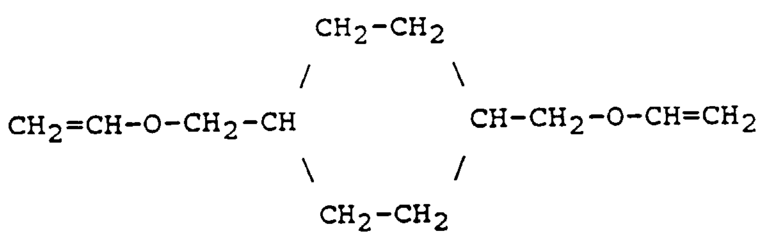

,

erhältlich bei der GAF Chem. Corp. unter dem Handelsnamen Rapi-Cure CHVE auf 50°C erwärmt. Man gibt 4 mg Platin in Form einer Lösung von $H_2PtCl_6xH_2O$ in Isopropanol zu, worauf die Temperatur des Reaktionsgemisches auf ca. 130°C ansteigt. Bei dieser Temperatur läßt man eine weitere Stunde ausreagieren, wobei über 99 % Umsatz erreicht werden. Man erhält 315 g eines Copolymers, das aus alternierenden Siloxan- und aliphatischen Etherblöcken besteht und eine Viskosität von 90 $mm^2/s$ bei 25°C hat. Entsprechend der Herstellungsmethode enthält das lineare Blockcopolymer Vinyletherendgruppen, wobei das durchschnittliche Molekulargewicht bei 1900 liegt. Das Produkt weist eine Oberflächenspannung von 22mN·$m^{-1}$ auf.

Beispiel 2:

336 g eines α,ω-Dihydrogendimethylpolysiloxans mit einem Gehalt an 0,149 % Si-gebundenem Wasserstoff vermischt man turbolent mit 67 g Triethylenglycoldivinylether (erhältlich unter dem Handelsnamen Rapi-Cure DVE-3 bei

der GAF-Corp.) und erwärmt auf ca. 80°C. Unter Stickstoffatmosphäre gibt man eine Lösung von 14 mg Platintetrachlorid in wenig 1-Octen zu, worauf sich das Gemisch auf 135°C erwärmt. Man hält diese Temperatur eine weitere Stunde und kühlt ab. Entsprechend der Synthese hat das Produkt die Struktur eines linearen Blockcopolymers aus Dimethylpolysiloxan- und Polyglycolketten mit 2-Vinyletherendgruppen. Die Viskosität bei 25°C beträgt 235 $mm^2/s$, das durchschnittliche Molekulargewicht rund 6000. Der Siloxananteil beläuft sich auf ca. 83 Gew.-% (aus $^1H$-NMR-Spektrum).

Beispiel 3:

403 g $\alpha,\omega$-Dihydrogendimethylpolysiloxan mit insgesamt 0,25 g Si-gebundenem Wasserstoff werden unter Stickstoff bei 90°C mit 42 g Triethylenglycoldivinylether (erhältlich unter dem Handelsnamen Rapi-Cure DVE-3 bei der GAF-Corp.) vermischt. Man gibt 24 mg Hexachlorplatinsäure, gelöst in etwas Isopropanol, hinzu. Nach dem Anstieg der Innentemperatur läßt man bei 130°C noch 3 Stunden reagieren, bis ein Umsatz von mehr als 99 % erreicht ist. Flüchtige Bestandteile werden bei 100°C und 5 hPa entfernt, worauf man ein klares Öl mit einer Viskosität von 220 $mm^2/s$ bei 25°C erhält. Die Struktur entspricht prinzipiell dem Polymerprodukt aus Beispiel 2, wobei nun die Siloxankettenlänge größer ist, die Dimethylpolysiloxan- mit den Polyglycolketten aber weniger oft alternieren. Bei etwa gleichem durchschnittlichen Molekulargewicht beträgt der Siloxananteil jetzt 91 Gew.-%.

Beispiel 4:

170 g Mischpolymerisat aus Trimethylsiloxan-, Dimethylsiloxan- und Hydrogenmethylsiloxaneinheiten mit einer Viskosität von 90 $mm^2/s$ bei 25°C und insgesamt 80 mg Si-gebundenem Wasserstoff vermischt man mit 29,5 g des Vinylethers Rapi-Cure CHVE, der in Beispiel 1 beschrieben ist, und 4 mg Platin in Form einer Lösung von $PtCl_4$ in 1-octen. Man heizt unter Stickstoff 3 Stunden auf 120°C, strippt flüchtige Anteile bei 5 hPa und erhält ein klares öl mit einer Viskosität von 280 $mm^2/s$ bei 25°C. Das Copolymer hat eine verzweigte Struktur, wobei Siloxanketten über aliphatische Ether verbrückt sind und gleichzeitig laterale Vinylethergruppen haben. Es enthält pro kg ca. 0,3 Mol Vinyletherdoppelbindungen.

Beispiel 5:

170 g Mischpolymerisat aus Trimethylsiloxan-, Dimethylsiloxan- und Hydrogenmethylsiloxaneinheiten mit einer Viskosität von 90 $mm^2/s$ bei 25°C werden mit 20 g des Vinylethers Rapi-Cure DVE-3, der in Beispiel 2 beschrieben ist, vermischt und unter Stickstoffatmosphäre auf 100°C erwärmt. Nach Zugabe von 10 mg $H_2PtCl_6 \times H_2O$, gelöst in etwas Isopropanol, steigt die Innentemperatur auf knapp 120°C, wo man sie weitere 3 Stunden hält. Nach Entfernung flüchtiger Bestandteile im Vakuum bei 5 hPa erhält man nach Filtration 175 g eines verzweigten Blockcopolymerisates aus Siloxanketten mit Polyglycolbrücken und SiC-gebundenen Vinylethergruppen. Das Polymerprodukt hat eine Viskosität von 1200 $mm^2/s$ bei 25°C und pro kg ca. 0,25 Mol Vinyletherdoppelbindungen.

Beispiel 6:

202 g des Vinylethers Rapi-Cure DVE-3, der in Beispiel 2 beschrieben ist, werden mit 4 mg Platin in Form eines Platin-1,3-divinyl-1,1,3,3-tetramethyldisiloxan-Komplexes versetzt und unter Stickstoffatmosphäre auf 90°C erwärmt. Man dosiert über einen Zeitraum von ca. 1,5 Stunden insgesamt 69 g 1,3-Dihydrogentetramethyldisiloxan zu und führt die Reaktion bei ca. 130°C zu Ende. Nach Entfernen flüchtiger Verbindungen bei 160°C und 5 hPa erhält man in quantitativer Ausbeute einen polymeren difunktionellen Vinylether mit der Viskosität 44 $mm^2/s$ bei 25°C. Dem $^1H$-NMR-Spektrum ist zu entnehmen, daß das Verhältnis $C{=}C/SiCH_2$ den Wert 0,61 hat. Es enthält pro kg ca. 2,6 Mol Vinyletherdoppelbindungen. Das Produkt weist eine Oberflächenspannung von 28$mN{\cdot}m^{-1}$ auf.

Beispiel 7:

Zur Herstellung eines über die Etherblöcke verzweigten Vinylether-Siloxancopolymers wird Beispiel 1 mit 100 g Trimethylolpropantrivinylether statt des dort verwendeten Divinylethers wiederholt. Nach Ende der Hydrosilylierungsreaktion wird der Vinyletherüberschuß bei 160°C und 3 hPa entfernt, worauf man ein klares Öl mit einer Viskosität von 145 $mm^2/s$ bei 25°C erhält. Das verzweigte Blockcopolymer enthält Divinyletherendgruppen und einen Siloxananteil von 76 Gew.-%. Es enthält pro kg ca. 1,6 Mol Vinyletherdoppelbindungen.

Beispiel 8:

10 g des in Beispiel 6 hergestellten Blockcopolymers werden mit 0,1 g [4-[2-(3-Dioctylmethylsilylpropyloxy)ethoxy]-phenyl]-jodoniumhexafluoroantimonat (Herstellung beschrieben in der deutschen Anmeldung mit dem Aktenzeichen P 41 42 327.5) bei 22°C gemischt und mit einem Glasstab in ca. 4 µm dünner Schicht auf mit Polyethylen beschichtetem Papier aufgebracht. Nach einer Belichtungszeit von 0,15 Sekunden mit einer Quecksilbermitteldrucklampe (80 Watt/cm) im Abstand von 10 cm ist das Blockcopolymer abriebfest ausgehärtet.

Beispiel 9:

170 g des in Beispiel 4 verwendeten Mischpolymerisats werden zusammen mit 17 g mit 100 ppm KOH inhibiertem Butan-1,4-dioldivinylether und 2 mg Platin in Form seines 1,3-Divinyltetramethylsiloxan-Komplexes vermischt und auf 136°C erwärmt. Nach 3 Stunden Reaktionszeit unter Stickstoff sind mehr als 97 % der Aktivwasserstoffgruppen verbraucht, worauf überschüssiger Divinylether bei 160° C und 5 hPa entfernt wird. Man erhält ein verzweigtes Copolymer aus aliphatischen Etherbausteinen und Siloxanblöcken mit der Viskosität 330 $mm^2 \cdot s^{-1}$ bei 25°C. Es enthält pro kg ca. 0,27 Mol Vinyletherdoppelbindungen.

## Patentansprüche

**1.** Vinyloxygruppen aufweisende Siloxancopolymere enthaltend

(a) Siloxaneinheiten der Formel

$$R_aSi(OR^1)_bO_{\frac{4-(a+b)}{2}} \quad \text{(I)},$$

wobei

R gleiche oder verschiedene, gegebenfalls halogenierte Kohlenwasserstoffreste mit 1 bis 18 Kohlenstoffatomen je Rest,
$R^1$ gleiche oder verschiedene Alkylreste mit 1 bis 4 Kohlenstoffatomen je Rest, die durch ein Ethersauerstoffatom substituiert sein können, bedeutet,
a 0, 1, 2 oder 3,
b 0, 1, 2 oder 3
und die Summe a+b nicht größer als 3 ist,

(b) je Molekül mindestens eine Einheit ausgewählt aus der Gruppe von Einheiten der Formeln

$$GR_cSiO_{\frac{4-(c+1)}{2}} \quad \text{(II)},$$

$$O_{\frac{4-(c+1)}{2}}R_cSi\text{-}G^1\text{-}SiR_cO_{\frac{4-(c+1)}{2}} \quad \text{(III)},$$

$$O_{\frac{4-(c+1)}{2}}R_cSi-G^2(-SiR_cO_{\frac{4-(c+1)}{2}})-SiR_cO_{\frac{4-(c+1)}{2}} \quad \text{(IV)}$$

und

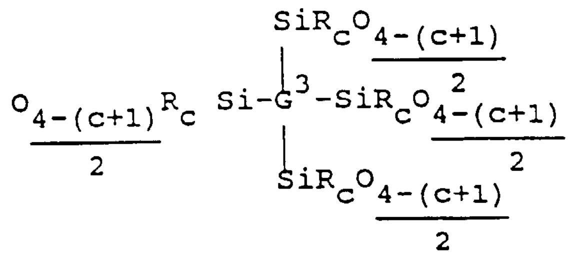 (V),

wobei

R die oben dafür angegebene Bedeutung hat,

c 0, 1 oder 2 ist,

G einen Rest der Formel

$$-CH_2CH_2OY(OCH{=}CH_2)_{x-1}$$

bedeutet, wobei

Y einen zweiwertigen, dreiwertigen, vierwertigen, fünfwertigen oder sechswertigen Kohlenwasserstoffrest mit 1 bis 20 Kohlenstoffatomen je Rest bedeutet,
der durch Gruppen der Formel

- OH
- $OR^2$ (wobei $R^2$ einen Alkylrest mit 1 bis 6 Kohlenstoffatomen je Rest bedeutet)
- $OSiR^3_3$ (wobei $R^3$ einen Methyl-, Ethyl-, Isopropyl-, tert.-Butyl- oder Phenylrest bedeutet)
- 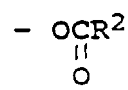
  (wobei $R^2$ die oben dafür angegebene Bedeutung hat) oder
- X (wobei X ein Halogenatom bedeutet)
  substituiert sein kann
  oder durch mindestens ein Sauerstoffatom, eine Carboxyl-oder eine Carbonylgruppe unterbrochen

sein kann, und

x 2, 3, 4, 5 oder 6 ist,

$G^1$ einen Rest der Formel

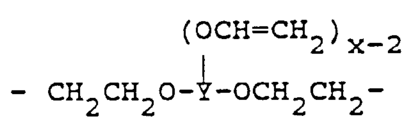 ,

$G^2$ einen Rest der Formel

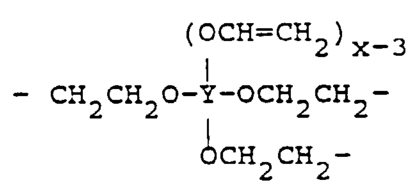

und

$G^3$ einen Rest der Formel

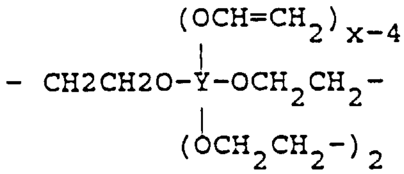

,

wobei Y und x die oben dafür angegebene Bedeutung haben, bedeutet.

**2.** Vinyloxygruppen aufweisende Siloxancopolymere nach Anspruch 1, dadurch gekennzeichnet, daß sie Siloxaneinheiten der Formel (I), je Molekül mindestens eine Siloxaneinheit der Formel (II) und je Molekül mindestens eine Einheit ausgewählt aus der Gruppe der Einheiten der Formeln (III), (IV) und (V) enthalten.

**3.** Vinyloxygruppen aufweisende Siloxancopolymere nach Anspruch 1 oder 2, dadurch gekennzeichnet, daß sie enthalten

(a) Siloxaneinheiten der Formel

$$R_2SiO \qquad (I'),$$

(b) je Molekül mindestens zwei Siloxaneinheiten der Formel

$$GR_2SiO_{1/2} \qquad (II')$$

und
je Molekül mindestens eine Einheit der Formel

$$O_{1/2}R_2SiG^1SiR_2O_{1/2} \qquad (III'),$$

wobei R gleiche oder verschiedene, gegebenenfalls halogenierte Kohlenwasserstoffreste mit 1 bis 18 Kohlenstoffatomen je Rest,

G einen Rest der Formel

$$-CH_2CH_2OY(OCH{=}CH_2)_{x-1}$$

und

$G^1$ einen Rest der Formel

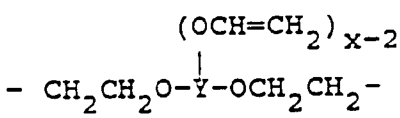

bedeutet, wobei

Y einen zweiwertigen, dreiwertigen, vierwertigen, fünfwertigen oder sechswertigen Kohlenwasserstoffrest mit 1 bis 20 Kohlenstoffatomen je Rest bedeutet,
der durch Gruppen der Formel

- OH
- $OR^2$ (wobei $R^2$ einen Alkylrest mit 1 bis 6 Kohlenstoffatomen je Rest bedeutet)
- $OSiR^3_3$ (wobei $R^3$ einen Methyl-, Ethyl-, Isopropyl-, tert.-Butyl- oder Phenylrest bedeutet)
-

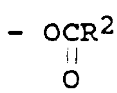

(wobei $R^2$ die oben dafür angegebene Bedeutung hat) oder

- X (wobei X ein Halogenatom bedeutet) substituiert sein kann
  oder durch mindestens ein Sauerstoffatom, eine Carboxyl- oder eine Carbonylgruppe unterbrochen sein kann, und

x 2, 3, 4, 5 oder 6 bedeutet.

**4.** Verfahren zur Herstellung der Vinyloxygruppen aufweisenden Siloxancopolymere, dadurch gekennzeichnet, daß mehr als eine Vinyloxygruppe aufweisende organische Verbindung (1) der allgemeinen Formel

$$Y(OCH{=}CH_2)_x \qquad (1),$$

wobei
Y einen zweiwertigen, dreiwertigen, vierwertigen, fünfwertigen oder sechswertigen Kohlenwasserstoffrest mit 1 bis 20 Kohlenstoffatomen je Rest bedeutet,
der durch Gruppen der Formel

- OH
- $OR^2$ (wobei $R^2$ einen Alkylrest mit 1 bis 6 Kohlenstoffatomen je Rest bedeutet)
- $OSiR^3_3$ (wobei $R^3$ einen Methyl-, Ethyl-, Isopropyl-, tert.-Butyl- oder Phenylrest bedeutet)
- 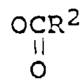

  (wobei $R^2$ die oben dafür angegebene Bedeutung hat) oder
- X (wobei X ein Halogenatom bedeutet) substituiert sein kann
  oder durch mindestens ein Sauerstoffatom, eine Carboxyl- oder eine Carbonylgruppe unterbrochen sein kann, und

x 2, 3, 4, 5 oder 6 bedeutet,
mit Organopolysiloxan (2) mit mindestens einem Si-gebundenen Wasserstoffatom je Molekül in Gegenwart von die Anlagerung von Si-gebundenem Wasserstoff an aliphatische Doppelbindung förderndem Katalysator (3) umgesetzt wird, wobei das eingesetzte Verhältnis von aliphatische Doppelbindung in organischer Verbindung (1) zu Si-gebundenem Wasserstoff im Organopolysiloxan (2) ein solches ist, daß Vinyloxygruppen aufweisende Siloxancopolymere mit durchschnittlich mindestens einer Vinyloxygruppe der Formel

$$-OCH{=}CH_2$$

erhalten werden.

**5.** Verfahren nach Anspruch 4, dadurch gekennzeichnet, daß als organische Verbindung (1)

$$CH_2{=}CH{-}O{-}\ (CH_2CH_2O)_3{-}CH{=}CH_2\ ,$$

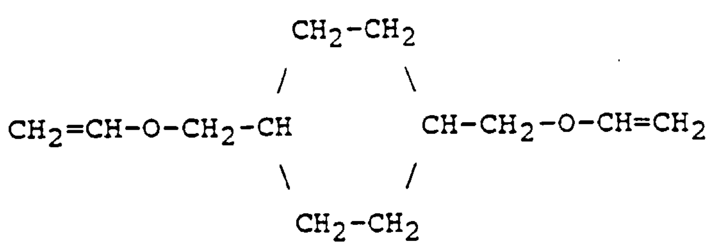

oder

$$CH_3{-}CH_2{-}C[CH_2{-}O{-}CH{=}CH_2]_3$$

verwendet wird.

**6.** Verfahren nach Anspruch 4, dadurch gekennzeichnet, daß als Organopolysiloxan (2) mit mindestens einem Si-gebundenen Wasserstoffatom je Molekül solches der allgemeinen Formel

$$H_dR_{3-d}SiO(SiR_2O)_o(SiRHO)_pSiR_{3-d}H_d \qquad (VII),$$

wobei

R gleiche oder verschiedene, gegebenenfalls halogenierte Kohlenwasserstoffreste mit 1 bis 18 Kohlenstoffatom(en) je Rest,
d gleich oder verschieden und 0 oder 1 ist,
o 0 oder eine ganze Zahl von 1 bis 1000 und
p 0 oder eine ganze Zahl von 1 bis 6 bedeutet,

verwendet wird.

7. Verfahren nach Anspruch 4, 5 oder 6, dadurch gekennzeichnet, daß das so erhaltene Vinyloxygruppen aufweisende Siloxancopolymer mit Organopolysiloxan (4) ausgewählt aus der Gruppe bestehend aus linearen, endständige Triorganosiloxygruppen aufweisenden Organopolysiloxanen, linearen, endständige Hydroxylgruppen aufweisenden Organopolysiloxanen, cyclischen Organopolysiloxanen und Mischpolymerisaten aus Diorganosiloxan- und Monoorganosiloxaneinheiten äquilibriert wird.

8. Verwendung der Vinyloxygruppen aufweisenden Siloxancopolymere nach Anspruch 1, 2 oder 3 in durch Licht vernetzbare Zusammensetzungen auf Grundlage von vorstehend genannten Siloxancopolymeren.

9. Verwendung der Vinyloxygruppen aufweisenden Siloxancopolymere nach Anspruch 1, 2 oder 3 zur Herstellung von durch Licht vernetzbaren Überzügen.

## Claims

1. Siloxane copolymers containing vinyloxy groups and comprising

(a) siloxane units of the formula

$$R_aSi(OR^1)_bO_{\frac{4-(a+b)}{2}} \qquad (I)$$

wherein

R denotes identical or different, optionally halogenated hydrocarbon radicals having 1 to 18 carbon atoms per radical,
$R^1$ denotes identical or different alkyl radicals having 1 to 4 carbon atoms per radical, which can be substituted by an ether oxygen atom,
a is 0, 1, 2 or 3,
b is 0, 1, 2 or 3
and the sum of a+b is not greater than 3,

(b) at least one unit per molecule chosen from the group comprising units of the formula

$$GR_cSiO_{\frac{4-(c+1)}{2}} \qquad (II)$$

$$O_{\frac{4-(c+1)}{2}}R_cSi\text{-}G^1\text{-}SiR_cO_{\frac{4-(c+1)}{2}} \qquad (III)$$

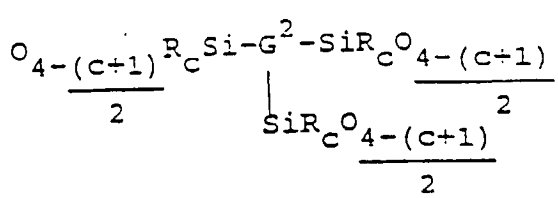
(IV)

and

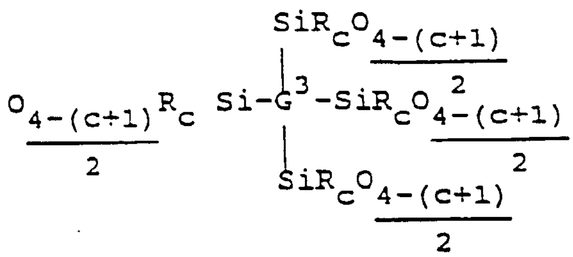 (V)

wherein

R has the meaning given above for this radical,
c is 0, 1 or 2,
G denotes a radical of the formula

$$-CH_2CH_2OY(OCH{=}CH_2)_{x-1}$$

wherein

Y denotes a divalent, trivalent, tetravalent, pentavalent or hexavalent hydrocarbon radical having 1 to 20 carbon atoms per radical, which can be substituted by groups of the formula

- OH
- $OR^2$ (wherein $R^2$ denotes an alkyl radical having 1 to 6 carbon atoms per radical)
- $OSiR^3_3$ (wherein $R^3$ denotes a methyl, ethyl, isopropyl, tert-butyl or phenyl radical)
- 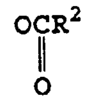

  (wherein $R^2$ has the meaning given above for this radical) or
- X (wherein X denotes a halogen atom) or can be interrupted by at least one oxygen atom, one carboxyl or one carbonyl group, and

x is 2, 3, 4, 5 or 6,
$G^1$ denotes a radical of the formula

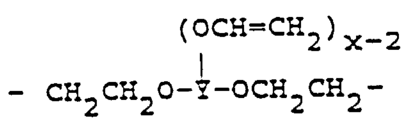

$G^2$ denotes a radical of the formula

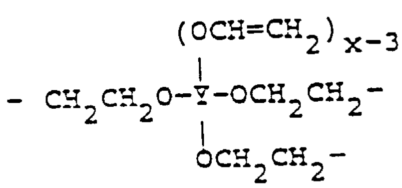

and
$G^3$ denotes a radical of the formula

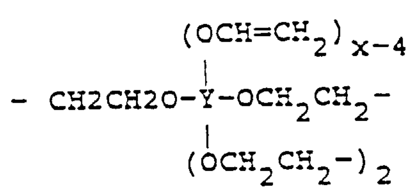

wherein Y and x have the meaning given above for these symbols.

**2.** Siloxane copolymers containing vinyloxy groups, according to Claim 1, characterised in that the siloxane units of the formula (I) contain, per molecule, at least one siloxane unit of the formula (II) and, per molecule, at least one unit selected from the group comprising the units of the formulae (III), (IV) and (V).

**3.** Siloxane copolymers containing vinyloxy groups, according to Claim 1 or 2, characterised in that they comprise

(a) siloxane units of the formula

$$R_2SiO \quad (I'),$$

(b) per molecule, at least two siloxane units of the formula

$$GR_2SiO_{1/2} \quad (II')$$

and per molecule, at least one unit of the formula

$$O_{1/2}R_2SiG^1SiR_2O_{1/2} \quad (III')$$

wherein R denotes identical or different, optionally halogenated hydrocarbon radicals having 1 to 18 carbon atoms per radical,

G denotes a radical of the formula

$$-CH_2CH_2OY(OCH=CH_2)_{x-1}$$

and

$G^1$ denotes a radical of the formula

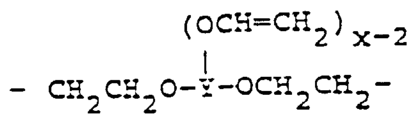

wherein

Y denotes a divalent, trivalent, tetravalent, pentavalent or hexavalent hydrocarbon radical having 1 to 20 carbon atoms per radical, which can be substituted by groups of the formula

- OH
- $OR^2$ (wherein $R^2$ denotes an alkyl radical having 1 to 6 carbon atoms per radical)
- $OSiR^3_3$ (wherein $R^3$ denotes a methyl, ethyl, isopropyl, tert-butyl or phenyl radical)
- 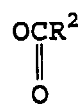

  (wherein $R^2$ has the meaning above for this radical) or
- X (wherein X denotes a halogen atom) or can be interrupted by at least one oxygen atom, one carboxyl or one carbonyl group, and

x denotes 2, 3, 4, 5 or 6.

**4.** Process for the preparation of the siloxane copolymers containing vinyloxy groups, characterised in that an organic compound (1) containing more than one vinyloxy group, of the general formula

$$Y(OCH=CH_2)_x \quad (1)$$

wherein

Y denotes a divalent, trivalent, tetravalent, pentavalent or hexavalent hydrocarbon radical having 1 to 20 carbon atoms per radical, which can be substituted by groups of the formula

- OH
- $OR^2$ (wherein $R^2$ denotes an alkyl radical having 1 to 6 carbon atom(s) per radical)
- $OSiR^3_3$ (wherein $R^3$ denotes a methyl, ethyl, isopropyl, tert-butyl or phenyl radical)
- 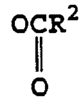

  (wherein $R^2$ has the meaning given above for this radical) or
- X (wherein X denotes a halogen atom) or can be interrupted by at least one oxygen atom, one carboxyl or one carbonyl group, and

x is 2, 3, 4, 5 or 6.

is reacted with an organopolysiloxane (2) having at least one Si-bonded hydrogen atom per molecule, in the presence of a catalyst (3) which promotes the addition of Si-bonded hydrogen onto an aliphatic double bond, the ratio employed of aliphatic double bond in the organic compound (1) to Si-bonded hydrogen in the organopolysiloxane (2) is such that siloxane copolymers containing vinyloxy groups, having on average at least one vinyloxy group of the formula

$$-OCH=CH_2$$

are obtained.

**5.** Process according to Claim 4, characterised in that

$$CH_2=CH-O-(CH_2CH_2O)_3-CH=CH_2,$$

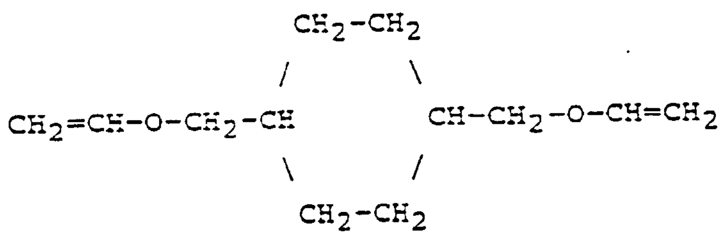

or

$$CH_3-CH_2-C[CH_2-O-CH=CH_2]_3$$

is used as the organic compound (1).

**6.** Process according to Claim 4, characterised in that the organopolysiloxane (2) having at least one Si-bonded hydrogen atom per molecule which is used is one of the general formula

$$H_dR_{3-d}SiO(SiR_2O)_o(SiRHO)_pSiR_{3-d}H_d \qquad (VII)$$

wherein

R denotes identical or different, optionally halogenated hydrocarbon radicals with 1 to 18 carbon atom(s) per radical,
d is identical or different and is 0 or 1,
o denotes 0 or an integer from 1 to 1000 and
p denotes 0 or an integer from 1 to 6.

**7.** Process according to Claim 4, 5 or 6, characterised in that the resulting siloxane copolymer containing vinyloxy groups is equilibrated with an organopolysiloxane (4) chosen from the group comprising linear organopolysiloxanes containing terminal triorganosiloxy groups, linear organopolysiloxanes containing terminal hydroxyl groups, cyclic

organopolysiloxanes and copolymers of diorganosiloxane and monoorganosiloxane units.

8. Use of the siloxane copolymers containing vinyloxy groups according to Claim 1, 2 or 3 in compositions which can be crosslinked by light and are based on the abovementioned siloxane copolymers.

9. Use of the siloxane copolymers containing vinyloxy groups according to Claim 1, 2 or 3 for the production of coatings which can be crosslinked by light.

**Revendications**

1. Copolymères de siloxane comportant des groupes vinyloxy, contenant :

(a) des unités siloxane de formule

$$R_aSi(OR^1)_bO_{\frac{4-(a+b)}{2}} \quad (I),$$

où

R représente des radicaux hydrocarbure identiques ou différents, facultativement halogénés, avec 1 à 18 atomes de carbone par radical,
$R^1$ représente des radicaux alcoyle identiques ou différents, avec 1 à 4 atomes de carbone par radical, qui peuvent être substitués par un atome d'oxygène de type éther,
a est 0, 1, 2 ou 3,
b est 0, 1, 2 ou 3
et la somme a+b n'est pas supérieure à 3,

(b) par molécule, au moins une unité choisie dans le groupe d'unités de formules

$$GR_cSiO_{\frac{4-(c+1)}{2}} \quad (II),$$

$$O_{\frac{4-(c+1)}{2}}R_cSi\text{-}G^1\text{-}SiR_cO_{\frac{4-(c+1)}{2}} \quad (III),$$

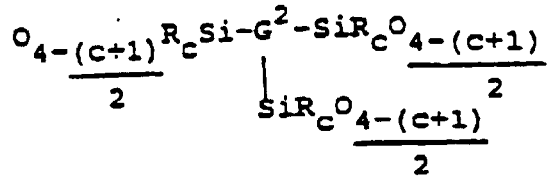

(IV)

et

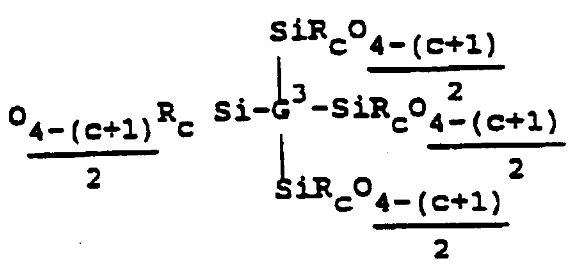

(V),

où

R a la signification donnée précédemment,

c est 0, 1 ou 2,

G représente un radical de formule

$$-CH_2CH_2OY\,(OCH{=}CH_2)_{x-1}$$

où

Y représente un radical hydrocarbure bivalent, trivalent, tétravalent, pentavalent ou hexavalent avec 1 à 20 atomes de carbone par radical, qui peut être substitué par des groupes de formule

- OH
- $OR^2$ (où $R^2$ représente un radical alcoyle de 1 à 6 atomes de carbone par radical)
- $OSiR^3_3$ (où $R^3$ représente un radical méthyle, éthyle, isopropyle, t-butyle ou phényle)
- 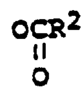

  (où $R^2$ a la signification donnée précédemment) ou
- X (où X représente un atome d'halogène) ou peut être interrompu par au moins un atome d'oxygène, un groupe carboxyle ou carbonylé, et

x est 2, 3, 4, 5 ou 6,

$G^1$ représente un radical de formule

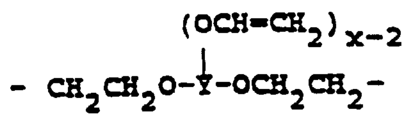 ,

$G^2$ représente un radical de formule

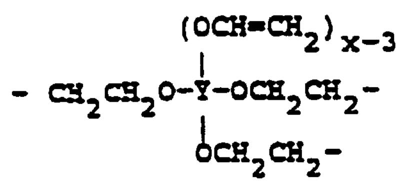

et

$G^3$ représente un radical de formule

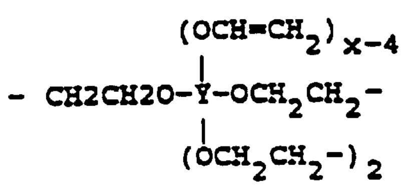 ,

ou

Y et x ont les significations données précédemment.

**2.** Copolymères de siloxane comportant des groupes vinyloxy suivant la revendication 1, caractérisés en ce qu'ils contiennent des unités siloxane de formule (I), par molécule, au moins une unité siloxane de formule (II), et par molécule, au moins une unité choisie parmi le groupe des unités de formules (III), (IV) et (V).

**3.** Copolymères de siloxane comportant des groupes vinyloxy suivant la revendication 1 ou 2, caractérisés en ce

qu'ils contiennent :

(a) des unités siloxane de formule

$$R_2SiO \quad (I'),$$

(b) par molécule, au moins deux unités siloxane de formule

$$GR_2SiO_{1/2} \quad (II')$$

et

par molécule, au moins une unité de formule

$$O_{1/2}R_2SiG^1SiR_2O_{1/2} \quad (III')$$

où

R représente des radicaux hydrocarbure identiques ou différents, facultativement halogénés, avec 1 à 18 atomes de carbone par radical,
G représente un radical de formule

$$-CH_2CH_2OY(OCH{=}CH_2)_{x-1}$$

et
$G^1$ représente un radical de formule

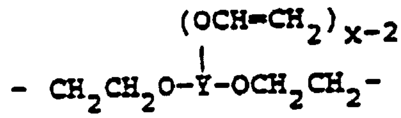

où
Y représente un radical hydrocarbure bivalent, trivalent, tétravalent, pentavalent ou hexavalent avec 1 à 20 atomes de carbone par radical, qui peut être substitué par des groupes de formule

- OH
- $OR^2$ (où $R^2$ représente un radical alcoyle de 1 à 6 atomes de carbone par radical)
- $OSiR^3_3$ (où $R^3$ représente un radical méthyle, éthyle, isopropyle, t-butyle ou phényle)
- 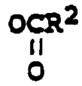

  (où $R^2$ a la signification donnée précédemment) ou
- X (où X représente un atome d'halogène)

ou peut être interrompu par au moins un atome d'oxygène un groupe carboxyle ou carbonyle, et
x représente 2, 3, 4, 5 ou 6.

**4.** Procédé de préparation de copolymères de siloxane comportant des groupes vinyloxy, caractérisé en ce qu'un composé organique (1) comportant plus d'un groupe vinyloxy, de formule générale

$$Y(OCH{=}CH_2)_x \quad (1),$$

où Y représente un radical hydrocarbure bivalent, trivalent, tétravalent, pentavalent ou hexavalent avec 1 à 20 atomes de carbone par radical, qui peut être substitué par des groupes de formule

- OH
- $OR^2$ (où $R^2$ représente un radical alcoyle de 1 à 6 atomes de carbone par radical)
- $OSiR^3_3$ (où $R^3$ représente un radical méthyle, éthyle, isopropyle, t-butyle ou phényle)
- 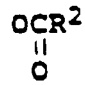

  (où $R^2$ a la signification donnée précédemment) ou
- X (où X représente un atome d'halogène) ou peut être interrompu par au moins un atome d'oxygène, un groupe carboxyle ou carbonyle, et

X représente 2, 3, 4, 5 ou 6

est mis à réagir avec un organopolysiloxane (2) avec au moins un atome d'hydrogène à liaison Si par molécule, en présence d'un catalyseur (3) activant l'addition d'hydrogène à liaison Si sur une double liaison aliphatique, où le rapport introduit de doubles liaisons aliphatiques dans le composé organique (1) à l'hydrogène à liaison Si dans l'organopolysiloxane (2) est tel que les copolymères de siloxane comportant des groupes vinyloxy sont obtenus avec, en moyenne, au moins un groupe vinyloxy de formule

$$-OCH=CH_2$$

**5.** Procédé suivant la revendication 4, caractérisé en ce que l'on utilise

$$CH_2=CH-O-(CH_2CH_2O)_3-CH=CH_2\ ,$$

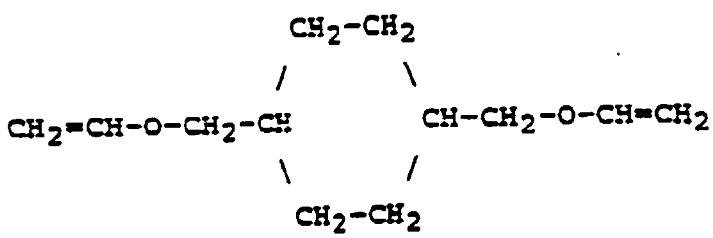

ou

$$CH_3-CH_2-C[CH_2-O-CH=CH_2]_3$$

comme composé organique (1).

**6.** Procédé suivant la revendication 4, caractérisé en ce que l'on utilise comme organopolysiloxane (2) avec au moins un atome d'hydrogène à liaison Si par molécule, un composé de formule générale

$$H_dR_{3-d}SiO(SiR_2O)_o(SiRHO)_pSiR_{3-d}H_d \qquad (VII),$$

où

R représente des radicaux hydrocarbure identiques ou différents, facultativement halogénés, avec 1 à 18 atomes de carbone par radical,
d est identique ou différent et est 0 ou 1,
o représente 0 ou un nombre entier de 1 à 1000 et
p représente 0 ou un nombre entier de 1 à 6.

**7.** Procédé suivant la revendication 4, 5 ou 6, caractérisé en ce que le copolymère de siloxane comportant des radicaux vinyloxy ainsi obtenu est équilibré avec un organopolysiloxane (4) choisi parmi le groupe consistant en les organopolysiloxanes linéaires, comportant des groupes triorganosiloxy terminaux, les organopolysiloxanes linéaires, comportant des groupes hydroxyle terminaux, les organopolysiloxanes cycliques et les copolymères d'unités diorganosiloxane et monoorganosiloxane.

**8.** Utilisation des copolymères de siloxane comportant des groupes vinyloxy suivant la revendication 1, 2 ou 3, dans des compositions réticulables par la lumière à base des copolymères de siloxane cités précédemment.

**9.** Utilisation des copolymères de siloxane comportant des groupes vinyloxy suivant la revendication 1, 2 ou 3, dans la préparation d'enduits réticulables par la lumière.